(19) Europäisches Patentamt

European Patent Office

Office européen des brevets

(11) Veröffentlichungsnummer: **0 363 512 B1**

(12) **EUROPÄISCHE PATENTSCHRIFT**

(45) Veröffentlichungstag der Patentschrift: **06.05.92**

(51) Int. Cl.⁵: **G01D 5/14**, G01P 3/488

(21) Anmeldenummer: **88117054.2**

(22) Anmeldetag: **13.10.88**

(54) Anordnung zur berührungsfreien Erfassung der Drehzahl eines rotierenden Zahnrades.

(43) Veröffentlichungstag der Anmeldung:
**18.04.90 Patentblatt 90/16**

(45) Bekanntmachung des Hinweises auf die
Patenterteilung:
**06.05.92 Patentblatt 92/19**

(84) Benannte Vertragsstaaten:
**AT DE FR GB IT NL SE**

(56) Entgegenhaltungen:
**EP-A- 0 044 047**
**GB-A- 2 176 616**
**US-A- 4 518 918**

(73) Patentinhaber: **SIEMENS AKTIENGESELL-
SCHAFT**
**Wittelsbacherplatz 2**
**W-8000 München 2(DE)**

(72) Erfinder: **Lachmann, Ulrich**
**Zirlerstrasse 11**
**W-8000 München(DE)**
Erfinder: **Jasberg, Hartmut, Dipl.-Ing.**
**Putzbrunner Strasse 78**
**W-8012 Ottobrunn(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.08/2.18/2.0)

## Beschreibung

Die vorliegende Erfindung bezieht sich auf eine Anordnung zur berührungsfreien Erfassung der Drehzahl eines rotierenden Zahnrades gemäß dem Oberbegriff des Patentanspruchs 1.

Wie beispielsweise aus Ulrich von Borcke, Feldplatten-Differentialfühler FP 210, Siemens-Bauteile-Informationen 10(1972), Heft 5, S. 129 bis 132 und Hans A. Cuno, Einfache Berechnung von Feldplatten in Abhängigkeit von Magnetfeld und Temperatur, Siemens-Bauteile-Report 14(1976), Heft 3, S. 89 bis 93 bekannt ist, werden durch einen Permanentmagneten vorgespannte, aus magnetisch empfindlichem Halbleitermaterial bestehende Feldplatten zur Messung der Drehzahl eines Zahnrades verwendet. Die Feldplatten sind gegenüber der Stirnseite des rotierenden Zahnrades fest angebracht und zwar in einem Abstand voneinander, der ungefähr der halben Zahnteilung des Zahnrades entspricht. Damit ergeben sich in beiden Feldplatten durch das rotierende Zahnrad hervorgerufene Nutzsignale, welche einander gegenüber um etwa 180° phasenverschoben sind. Dagegen bewirken beispielsweise Störfelder und Temperaturschwankungen in beiden Feldplatten gleichphasige Störsignale. Durch die Subtraktion der von den beiden Feldplatten ausgehenden Signale wird erreicht, daß die Störsignale gedämpft und die Nutzsignale verstärkt werden. Dieses auch mit Gleichtaktunterdrückung bezeichnete Verhalten dämpft bei einem Feldplattendifferentialfühler externe Störungen, die auf beide Feldplatten gleichzeitig einwirken. Störungen, die durch die Feldplatten selbst begründet sind, werden dagegen nicht vermindert.

In der DE-PS 30 26 226 ist eine Anordnung beschrieben, welche zur Erhöhung des auswertbaren Nutzsignals bei einem auf dem Hall'schen Prinzip beruhenden Magnetfeldaufnehmer dient. Diese als Hall-Sensoren bezeichneten Aufnehmer auf Halbleiterbasis sind aus mindestens einem mit eingeprägtem Steuerstrom betriebenen Hall-Generator und mit einem an die Hall-Signalstrecke des Hall-Generators angekoppelten Spannungs-Strom-Wandler aufgebaut. Die Ausgänge der Spannungs-Strom-Wandler sind phasengleich zusammengeführt. Durch das Zusammenschalten von n Hall-Generatoren wird das Nutzsignal auf das n-fache erhöht, während unkorrelierte Störsignale, wie beispielsweise Rauschen, um das Wurzel aus n-fache abnehmen, wodurch sich ein günstigeres Nutz-Stör-Signal-Verhältnis ergibt. Jedoch bleibt der Einfluß externer Störgrößen wie Temperaturschwankungen oder Störfelder ungemindert.

Weiterhin sind ähnliche Anordnungen aus der GB 2 176 616 A und der US 4,518,918 bekannt. Beide Schaltungen weisen Zwei Hall-Generatoren auf, denen eine Differenzverstärkerstufe nachgeschaltet ist. Die Differenzverstärkerstufe der GB 2 176 616 A weist zusätzlich eine Hysteresis auf. Doch auch diese Anordnung vermögen es nicht, große Temperaturschwankungen oder Störfelder zu kompensieren.

Der vorliegenden Erfindung liegt die Aufgabe zugrunde, eine Schaltungsanordnung zur berührungsfreien Erfassung der Drehzahl eines rotierenden Zahnrades mit höherem Nutz-Stör-Signal-Verhältnis zu schaffen.

Diese Aufgabe wird bei einer Schaltungsanordnung der eingangs genannten Art erfindungsgemäß durch die kennzeichnenden Merkmale des Patentanspruchs 1 gelöst.

Vorteil der Erfindung ist es, daß sowohl von außen einwirkende, als auch durch die Anordnung selbst hervorgerufene Störsignale im Verhältnis zu den Nutzsignalen gedämpft werden.

Ausgestaltungen und Weiterbildungen der Erfindung sind in abhängigen Patentansprüchen gekennzeichnet.

Die Erfindung wird im folgenden anhand von den in den FIG der Zeichnung dargestellten Ausführungsbeispielen näher erläutert.

Es zeigt:

FIG 1      den mechanischen Aufbau einer grundsätzlichen Ausführungsform einer erfindungsgemäßen Anordnung in einer Skizze;

FIG 2      ein Blockschaltbild einer grundsätzlichen Ausführungsform einer erfindungsgemäßen Anordnung;

FIG 3      ein Schaltbild einer Ausführungsform einer erfindungsgemäßen Anordnung von Hall-Generatoren

FIG 4      ein Schaltbild einer Ausführungsform einer erfindungsgemäßen Anordnung mit Differenzverstärker und Auswerteschaltung.

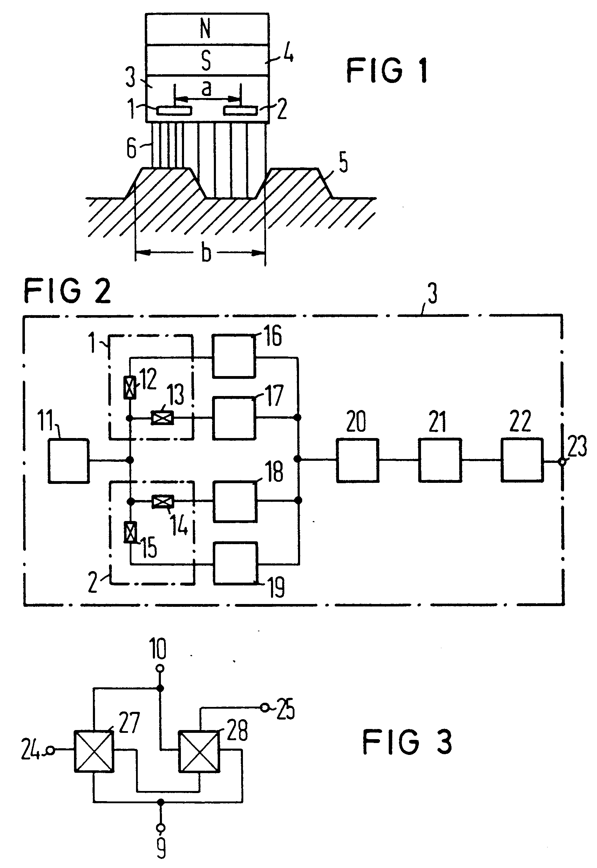

Gemäß FIG 1 sind bei einer erfindungsgemäßen Anordnung zwei sich in einem Mittenabstand a voneinander befindende, gleichartige Hall-Sensoren 1, 2 mit einer Ansteuer- und einer Auswerteschaltung zu einem integrierten Schaltkreis 3 zusammengefaßt und durch einen Permanentmagneten 4 magnetisch vorgespannt, indem ein Pol S des Permanentmagneten 4 zum integrierten Schaltkreis 3 hin und der andere Pol N von dem integrierten Schaltkreis 3 weg orientiert ist. Gegenüber der befestigten Anordnung aus Permanentmagnet 4 und integriertem Schaltkreis 3 ist ein rotierendes Zahnrad 5 derart angebracht, daß die Stirnseite des Zahnrades 5 parallel zu den beiden Hall-Sensoren liegt und die Zähne des Zahnrades 5 sich von einem Hall-Sensor zum anderen bewegend an dem integrierten Schaltkreis 3 in einer gegebenen Entfernung vorbeiziehen. Der Abstand zwischen zwei Zähnen, im folgenden Zahnteilung b genannt, ist dabei so bemessen, daß er dem doppelten Mittenabstand a der beiden Hall-Sensoren 1, 2 entspricht. Ein zwischen dem Permanentmagneten 4 und dem Zahnrad 5 auftretendes und auch den integrierten Schaltkreis 3 durchdringendes, magnetisches Feld, das in der Zeichnung durch Feldlinien 6 dargestellt ist, wird nun durch das rotierende Zahnrad in der Weise beeinflußt, daß sich in den beiden Hall-Sensoren 1, 2 entgegengesetzte Flußänderungen ergeben. In den beiden Hall-Sensoren 1, 2 entstehen dadurch Nutzsignale, welche gegeneinander um 180° phasenverschoben sind. Ein entsprechender mechanischer Aufbau ist beispielsweise aus Ulrich von Borcke, Feldplattendifferentialfühler FP 210, Siemens-Bauteile-Informationen 10(1972) Heft 5, S. 129 bis 132 und Hans A. Cuno, Einfache Berechnung von Feldplatten in Abhängigkeit von Magnetfeld und Temperatur, Siemens Bauteile Report 14(1976) Heft 3, S. 89 bis 93 für in Differentialschaltung betriebene Feldplatten bekannt.

Bei einer grundsätzlichen Ausführungsform nach FIG 2 umfassen die beiden gleichartigen Hall-Sensoren 1, 2 je zwei gleichartige Hall-Generatoren 12, 13 und 14, 15, welche beispielsweise aus einer gemeinsamen Steuerstromeinprägung als Ansteuerschaltung 11 gespeist werden. Eine Speisung der Hall-Sensoren 1, 2 durch eine gemeinsame Steuerspannungseinprägung ist erfindungsgemäß als Alternative vorgesehen. An die Hall-Signalstrecken der vier Hall-Generatoren 12, 13, 14, 15 sind jeweils Spannungs-Strom-Wandler 16, 17, 18, 19 angekoppelt, die an den Ausgängen zusammengeführt und mit einem Hochpaß 20 verbunden sind. Dem Hochpaß 20 ist ein Komparator 21 mit Hysterese und daran anschließend ein Verstärker 22 nachgeschaltet, dessen Ausgang als Ausgang 23 der gesamten zu einem integrierten Schaltkreis 3 zusammengefaßten Anordnung vorgesehen ist. Die beiden Hall-Sensoren 1, 2 werden in Differentialschaltung betrieben, so daß am Eingang des Hochpasses 20 die Differenz der von den beiden Hall-Sensoren 1, 2 ausgehenden Signale anliegt. Damit verdoppelt sich die Amplitude des Nutzsignales, während Störsignale, die auf beide Hall-Sensoren gleichzeitig wirken, unterdrückt werden.

Darüber hinaus wird in Weiterbildung der Erfindung bei beiden Hall-Sensoren 1, 2 jeweils einer der beiden Hall-Generatoren um 90° gegenüber dem anderen gedreht angeordnet. In FIG 3 der Zeichnung ist im Detail die Anordnung von zwei Hall-Generatoren 27, 28 um 90° zueinander gedreht gezeigt. Aus Gründen der Übersichtlichkeit sind jedoch keine Spannungs-Strom-Wandler in FIG 3 ausgeführt. Statt einer Addition von Signalströmen gemäß FIG 2 ist deshalb eine Reihenschaltung der Hall-Signalstrecken und die daraus resultierende Addition von Signalspannungen dargestellt. Daraus ergeben sich zwei Anschlüsse 24, 25, an denen das Hall-Signal anliegt. Zwei weitere Anschlüsse 9, 10 sind zur Einprägung des gemeinsamen Steuerstromes oder der gemeinsamen Steuerspannung vorgesehen, wobei die Hall-Steuerstrecken der beiden Hall-Generatoren parallel geschaltet sind. Der Vorteil einer um 90° gedrehten Anordnung der Hall-Generatoren liegt darin, daß beispielsweise durch mechanische Spannungen hervorgerufene störende Piezoeffekte bei einem Hall-Sensor kompensiert werden.

Gemäß FIG 2 ist den vier Spannungs-Strom-Wandlern 16, 17, 18, 19 der Hochpaß 20 nachgeschaltet. Ein Hochpaß unterdrückt vorteilhafterweise unerwünschte Gleichanteile wie beispielsweise Offsetspannungen und niederfrequente Störsignale. Bei entsprechender Dimensionierung werden auch Umdrehungen bis zu einer gegebenen Mindestdrehzahl nicht von der Schaltungsanordnung erfaßt.

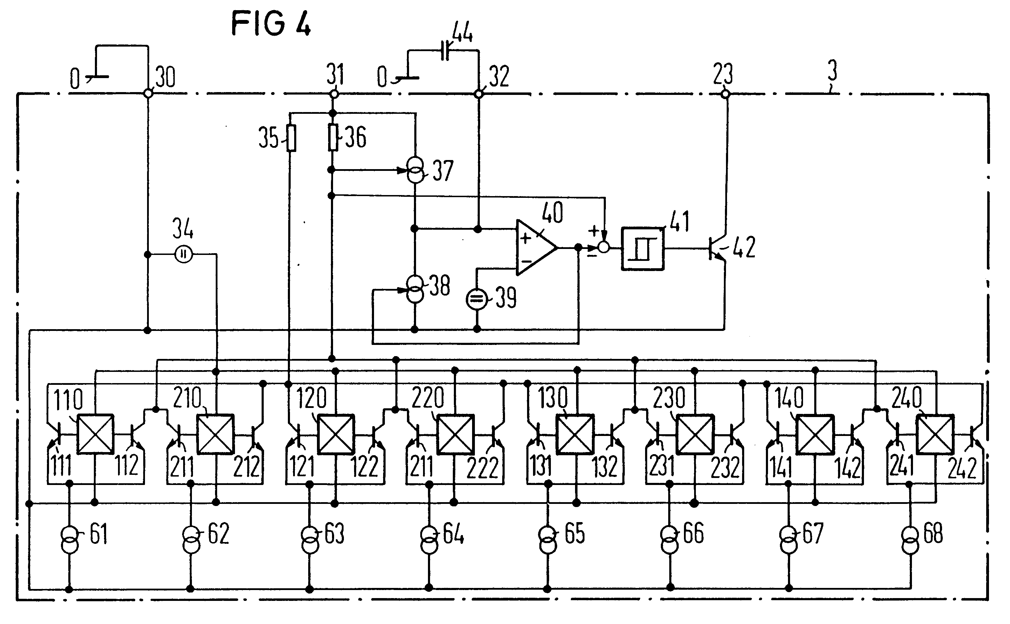

Gemäß der Ausführungsform nach FIG 4 sind für die beiden Hall-Sensoren 1, 2 nach FIG 2 je vier Hall-Generatoren 110, 120, 130, 140 und 210, 220, 230, 240 vorgesehen. Dabei bilden die Hall-Generatoren 110, 120, 130, 140 den einen Hall-Sensor 1 und die Hall-Generatoren 210, 220, 230, 240 den anderen Hall-Sensor 2. Die Spannungs-Strom-Wandler 16, 17, 18, 19 der Schaltungsanordnung nach FIG 2 sind als Differenzverstärker ausgebildet, welche jeweils Transistoren 111, 112, 121, 122, 131, 132, 141, 142, 211, 212, 221, 222, 231, 232, 241, 242 enthalten. Die Emitter der Transistoren der Differenzverstärker liegen jeweils an einer Stromeinprägung 61, 62 bis 68. Allen Differenzverstärkern gemeinsam sind zwei Lastwiderstände 35, 36 enthaltende Ausgangszweige, wobei ein Ausgangszweig darüber hinaus auf den Steuereingang einer ersten steuerbaren Stromeinprägung 37 geführt ist. Die Kollektoren der Differenzverstärker-Transistoren sind derart an die Ausgangszweige gekoppelt, daß jeweils Signalströme gleicher Phasenlage die von den Differenzverstärker-Transistoren 110, 120, 130, 140 des einen Hall-Sensors ausgehen, addiert und jene, die von den Differenzverstärker-Transistoren 210, 220, 230, 240 des anderen Hall-Sensors ausgehen, subtrahiert werden. So addieren sich die Signalströme der Transistorkreise 111, 212, 121, 222, 131, 232, 141, im Ausgangszweig des Lastwiderstandes 35, während sich die Signalströme der Transistorzweige 112, 211, 122, 221, 132, 231, 142, 241 im gegenphasigen Ausgangskreis des Lastwiderstandes 36 addieren. Somit werden die Ausgangssignale an den Hall-Strecken der Hall-Generatoren 110, 120, 130, 140 bzw. der Hall-Generatoren 210, 220, 230, 240 addiert bzw. subtrahiert, da die Signalströme der Differenzverstärker jeweils in den gemeinsamen Lastwiderständen 35, 36 mit gleicher bzw. entgegengesetzter Phasenlage addiert werden. Da die Kollektorströme eines Transistors wegen der am Kollektor zu messenden sehr hohen Ausgangsimpedanz praktisch eingeprägt sind, wird die Addition der Kollektorströme im wesentlichen ohne gegenseitige Rückwirkung einfach durch Verbinden der entsprechenden Kollektoren an den Lastwiderständen 35 und 36 erreicht. Alle Hall-Generatoren werden im Parallelbetrieb aus einer Ansteuerspannungsquelle 34 gemeinsam versorgt. Eine Spannungseinprägung ist zweckmäßig, um unterschiedliche Offsetgrößen und Temperaturabhängigkeiten der Hall-Generatoren auszugleichen.

Der Ausgangskreis der steuerbaren Stromeinprägung 37 ist einerseits mit dem nicht-einvertierenden Eingang eines Operationsverstärkers 40 und andererseits mit einem an einer Anschlußklemme 31 anliegenden Versorgungspotential verbunden. Der nicht-invertierende Eingang des Operationsverstärkers 40, dessen invertierender Eingang durch eine Referenzspannungsquelle 39 auf einem Referenzpotential gehalten wird, ist darüber hinaus zum einen über eine Anschlußklemme 30 durch eine weitere, vom Ausgang des Operationsverstärkers 40 angesteuerte Stromeinprägung 38 und zum anderen über eine Anschlußklemme 32 durch einen außerhalb des integrierten Schaltkreises 3 angeordneten Kondensator 44 auf Null-Potential 0 geführt. Das Signal am Ausgang des Operationsverstärkers 40 und das Signal am Lastwiderstand 36 sind zueinander gegenphasig auf den Eingang des Komparators 41 mit Hysterese geführt, dessen Ausgang seinerseits zur Erhöhung des Stromes am Ausgang 23 des integrierten Schaltkreises 3 eine Verstärkerstufe 42 nachgeschaltet ist. Dabei dient der am Ausgang des Operationsverstärkers 40 dem Signal überlagerte und durch die Referenzspannungsquelle 39 erzeugte Gleichspannungsanteil als Schaltschwelle für den Komparator 41 mit Hysterese. Die gezeigte Schaltungsanordnung, bestehend aus den beiden gesteuerten Stromeinprägungen 37 und 38, der Referenzspannungsquelle 39, dem Kondensator 44 und dem Operationsverstärker 40 stellt einen Hochpaß erster Ordnung dar. Die Vorteile dieser Ausführungsform eines Hochpasses besteht darin, daß nur eine zusätzliche Anschlußklemme 32 zur Grenzfrequenzeinstellung mit dem Kondensator 44 benötigt wird, da als zweiter Anschluß für den Kondensator 44 die ohnehin vorhandene, das Null-Potential 0 führende Anschlußklemme 30 verwendet wird. Weiterhin ist vorteilhaft, daß gegenüber bekannten Anordnungen wie im Beispiel der DE-OS 32 31 391 der frequenzbestimmende Kondensator 44 geringere Kapazitätswerte aufzuweisen braucht.

Sowohl das Ausführungsbeispiel in FIG 2 als auch in FIG 4 sind in integrierter Technik ausgeführt. Das bringt den Vorteil eines geringeren Herstellungsaufwandes und einer höheren Zuverlässigkeit mit sich. Des weiteren ist es auch, wie in FIG 3 bereits dargestellt, bei dem Ausführungsbeispiel nach FIG 4 vorteilhaft, die Hall-Generatoren gegeneinander um 90° gedreht zueinander anzuordnen, um durch mechanische Spannungen hervorgerufene und auf dem Piezoeffekt beruhende Störgrößen zu unterdrücken.

Anhand der vorstehend erläuterten Ausführungsbeispiele wird ersichtlich, daß bei einer erfindungsgemäßen Schaltungsanordnung sowohl von außen auf die beiden Hall-Sensoren einwirkende Störgrößen wie beispielsweise Temperaturschwankungen oder Störfelder, als auch in den Hall-Sensoren selbst begründete Störgrößen wie Piezoeffekt, Rauschen, Offsetdrift oder Offsetstreuung stärker unterdrückt werden, während das Nutzsignal nahezu verdoppelt wird. Dadurch ergibt sich eine bessere Auswertbarkeit des Nutzsignals, und es wird die Analyse kleinerer Signale ermöglicht, wie dies beispielsweise bei einem größeren Abstand zwischen Zahnrad und Hall-Sensor der Fall ist.

**Patentansprüche**

1. Anordnung zur berührungsfreien Erfassung der Drehzahl eines rotierenden Zahnrades (5) mittels zweier gleichartiger, fest angebrachter und magnetisch vorgespannter Hall-Sensoren (1, 2) deren Mittenabstand (a) der Hälfte der Zahnteilung (b) entspricht, mit mindestens je einem Paar gleichartiger, mit eingeprägtem Steuerstrom oder eingeprägter Steuerspannung betriebener, Hall-Generatoren (12, 13, 14, 15) und mit jeweils an die Signalstrekken der Hall-Generatoren angekoppelten Spannungs-Strom-Wandlern (16, 17, 18, 19), deren Ausgänge durch eine Auswerteschaltung (20, 21, 22) miteinander verknüpft sind, **dadurch gekennzeichnet,** daß die Ausgänge der Spannungs-Strom-Wandler (16, 17) eines Hall-Sensors (1) und die Ausgänge der Spannungs-Strom-Wandler (18, 19) des anderen Hall-Sensors (2) zueinander gegenphasig durch eine Auswerteschaltung (20, 21, 22) verknüpft sind, daß die Auswerteschaltung als Komparator (21, 41) mit Schalthysterese ausgebildet ist und dem Komparator (21, 41) mit Schalthysterese ein Hochpaß (20) vorgeschaltet ist.

2. Anordnung nach Anspruch 1, **dadurch gekennzeichnet,** daß die Hall-Generatoren jeweils eines Hall-Sensors um 90° gedreht zueinander angeordnet sind.

3. Anordnung nach Anspruch 1 oder 2, **dadurch gekennzeichnet,** daß die Spannungs-Strom-Wandler als Differenzverstärker (11, 112, 211, 212, 121, 122, 221, 222, 131, 132, 231, 232, 141, 142, 241, 242) ausgebildet sind und daß jeweils die Signalströme gleicher Phasenlage führenden Ausgangszweige der Differenzverstärker des einen Hall-Sensors (110, 120, 130, 140) und jeweils die Signalströme entgegengesetzter Phasenlage führenden Ausgangszweige der Differenzverstärker des anderen Hall-Sensors (210, 220, 230, 240) zusammengefaßt und auf die Auswerteschaltung geführt sind.

4.    Schaltungsanordnung nach Anspruch 1, 2 oder 3, **dadurch gekennzeichnet,** daß der Hochpaß aus einem Operationsverstärker (40) besteht, dessen invertierender Eingang über eine Referenzspannungsquelle (39) auf Null-Potential (0) liegt und dessen nichtinvertierender Eingang mit Zwei steuerbaren Stromeinprägungen (37, 38) verbunden ist, daß eine der beiden Stromeinprägungen (37) auf Versorgungspotential liegt und mit dem Ausgangssignal der Spannungs-Strom-Wandler beaufschlagt ist, daß die andere Stromeinprägung (38) auf Null-Potential (0) liegt und mit dem am Ausgang des Operationsverstärkers (40) anliegenden Signal beaufschlagt ist, daß ein Kondensator (44) zwischen den nichtinvertierenden Eingang des Operationsverstärkers (40) und das Null-Potential (0) geschaltet ist und daß als Ausgangssignal des Hochpasses (20) die Differenz des Signals am Ausgang des Operationsverstärkers (40) und des Ausgangssignals der Spannungs-Strom-Wandler vorgesehen ist.

5.    Schaltungsanordnung nach einem der Ansprüche 1 bis 4, **dadurch gekennzeichnet,** daß die Hall-Sensoren, die Auswerteschaltung (20, 21, 22) und eine Ansteuerschaltung (11) für die Hall-Sensoren (1, 2) zu einem integrierten Schaltkreis (3) zusammengefaßt sind.

**Claims**

1.    Arrangement for the non-contacting capture of the speed of a rotating toothed wheel (5) by means of two identical, firmly mounted and magnetically biased Hall sensors (1, 2), the centre-to-centre distance (a) of which corresponds to half of the tooth pitch (b), each having at least one pair of identical Hall generators (12, 13, 14, 15) operated with impressed control current or impressed control voltage, and having voltage/current transformers (16, 17, 18, 19) coupled in each case to the signal paths of the Hall generators, the outputs of which transformers are combined with one another by means of an evaluation circuit (20, 21, 22), characterised in that the outputs of the voltage/current transformers (16, 17) of a Hall sensor (1) and the outputs of the voltage/current transformers (18, 19) of the other Hall sensor (2) are combined in phase opposition to one another by means of an evaluation circuit (20, 21, 22), in that the evaluation circuit is designed as a comparator (21, 41) with switching hysteresis and a high-pass filter (20) is connected upstream of the comparator (21, 41) with switching hysteresis.

2.    Arrangement according to Claim 1, characterised in that the Hall generators of in each case one Hall sensor are arranged rotated by 90° to one another.

3.    Arrangement according to Claim 1 or 2, characterised in that the voltage/current transformers are designed as differential amplifiers (11, 112, 211, 212, 121, 122, 221, 222, 131, 132, 231, 232, 141, 142, 241, 242), and in that in each case the signal currents of output branches with the same phase relation of the differential amplifiers of the one Hall sensor (110, 120, 130, 140) and in each case the signal currents of output branches with the opposite phase relation of the differential amplifiers of the other Hall sensor (210, 220, 230, 240) are combined and fed to the evaluation circuit.

4.    Circuit arrangement according to Claim 1, 2 or 3, characterised in that the high-pass filter comprises an operational amplifier (40), the inverting input of which is connected via a reference voltage source (39) to zero potential (0) and the non-inverting input of which is connected to two controllable current impressing means (37, 38), in that one of the two current impressing means (37) is connected to supply potential and receives the output signal of the voltage/current transformers, in that the other current impressing means (38) is connected to zero potential (0) and receives the signal present at the output of the operational amplifier (40), in that a capacitor (44) is connected between the non-inverting input of the operational amplifier (40) and the zero potential (0), and in that the difference between the signal at the output of the operational amplifier (40) and the output signal of the voltage/current transformers is provided as the output signal of the high-pass filter (20).

5. Circuit arrangement according to one of Claims 1 to 4, characterised in that the Hall sensors, the evaluation circuit (20, 21, 22) and a drive circuit (11) for the Hall sensors (1, 2) are combined to form an integrated circuit (3).

**Revendications**

1. Dispositif pour déterminer sans contact la vitesse de rotation d'une roue dentée rotative (5), à l'aide de deux capteurs de Hall identiques (1,2), montés fixes et polarisés magnétiquement, et dont la distance (a) entre les centres correspond à la moitié du pas (b) des dents, et comportant au moins un couple de générateurs de Hall identiques (12,13,14,15), fonctionnant avec un courant de commande injecté ou une tension de commande injectée, et des convertisseurs tension-courant (16,17,18,19), qui sont couplés respectivement aux sections de transmission de signaux des générateurs de Hall et dont les sorties sont raccordées entre elles par un circuit d'évaluation (20,21,22), caractérisé par le fait que les sorties des convertisseurs tension-courant (16,17) d'un capteur de Hall (1) et les sorties des convertisseurs tension-courant (18,19) de l'autre capteur de Hall (2) sont raccordés entre eux, en opposition de phase, par un circuit d'évaluation (20,21,22), que le circuit d'évaluation est réalisé sous la forme d'un comparateur (21,41) présentant une hystérésis de commutation et qu'un filtre passe-haut (20) est branché en amont du comparateur (21,41) possédant l'hystérésis de commutation.

2. Dispositif suivant la revendication 1, caractérisé par le fait que les générateurs de Hall d'un capteur de Hall respectif sont pivotés de 90° l'un par rapport à l'autre.

3. Dispositif suivant la revendication 1 ou 2, caractérisé par le fait que les convertisseurs tension-courant sont réalisés sous la forme d'amplificateurs différentiels (11,112,211,212,121,122,221,222,131,132,231,-232,141,142,241,242) et que respectivement les branches de sortie, qui véhiculent les courants de signal possédant la même position de phase, des amplificateurs différentiels d'un capteur de Hall (110,120,130,140) et les branches de sortie respectives, qui véhiculent des courants de signal possédant des positions de phase opposées, des amplificateurs différentiels de l'autre capteur de Hall (210,220,230,240) sont réunis et raccordés au circuit d'évaluation.

4. Montage suivant la revendication 1, 2 ou 3, caractérisé par le fait que le filtre passe-haut est constitué par un amplificateur opérationnel (40), dont l'entrée inverseuse est placée au potentiel nul (0) par l'intermédiaire d'une source de tension de référence (39) et dont l'entrée non inverseuse est raccordée à deux unités commandables d'injection de courant (37,38), que l'une des deux unités d'injection de courant (37) est placée au potentiel d'alimentation et est chargée par le signal de sortie du convertisseur tension-courant, que l'autre unité d'injection de courant (38) est placée au potentiel nul (0) et est chargée par le signal appliqué à la sortie de l'amplificateur opérationnel (40), qu'un condensateur (44) est branché entre l'entrée non inverseuse de l'amplificateur opérationnel (40) et le potentiel nul (0), et qu'il est prévu, comme signal de sorte du filtre passe-haut (20), la différence entre le signal présent à la sortie de l'amplificateur opérationnel (40) et le signal de sortie du convertisseur tension-courant.

5. Montage suivant l'une des revendications 1 à 4, caractérisé par le fait que les capteurs de Hall, le circuit d'évaluation (20,21,22) et un circuit de commande (11) pour les capteurs de Hall (1,2) sont réunis en un circuit intégré (3).

FIG 1

FIG 2

FIG 3

FIG 4